# EUROPEAN PATENT APPLICATION

(11) **EP 0 663 759 A1**
(43) Date of publication of application: **19.07.1995**
(21) Application number: 95300219.3
(22) Date of filing: 13.01.1995
(51) Int. Cl.: H04N 1/40

(54) **Digital LED printer with multiple print imaging modes**

(30) Priority: 14.01.1994 US 181546
(71) Applicant: XEROX CORPORATION, Rochester New York 14644 (US)
(72) Inventor: Corona, Stephen C., Rochester NY 14617-4836 (US); Tien, Paul C., Torrance CA 90501 (US); Dir, Gary A., Fairport NY 14450 (US); Duval, David R., Lake Montezuma AZ 86342 (US); Ambalavanar, Samuel D., Rochester NY 14625 (US)
(74) Representative: Goode, Ian Roy

(57) **Abstract**

A digital LED printer is described which enables improved printing of images including both text and half-tones. A plurality of LED chips (1,2, ....N) are aligned in a row to form a printbar of a length sufficient to expose the width of a recording medium, such as a photoreceptor drum or belt. Each LED chip has an associated driver chip (40) which controls the individual LED on/off time as well as the magnitude of current applied to each LED so as to maintain uniform exposure of each energized LED. The LED on/off time is controlled by selection of one of a plurality of two bit or four bit gray level strobe signals, which are decoded (38) according to system logic. The LED printbar is addressed, during each pixel time interval, along a plurality of sub-lines, the exposure levels of each sub-line differing from the other. In one technique, sub-lines are associated with either printing of text or half-tones. In another technique, the number of gray level exposures is increased by overprinting sub-lines with subsequent sub-lines of different resolutions.

## Description

The present invention relates to a LED printbar for use in digital printing applications, and, more particularly, to a printbar having multiple exposure levels and multi-level gray exposures and adapted to provide multiple print imaging modes within a print line.

Image printbars which are used in image recording systems are well known in the art. The printbar generally consists of a linear array of a plurality of discrete, light-emitting sources. Examples of printbars include wire dot, electrostatic, ink jet, and thermal printheads. Light emitting diode (LED) printheads have become preferred because of their high resolution enabled by arranging in a linear array a large number of LED's and providing a relative movement between the LED printhead and an image recording member so as to produce a scanning movement of the array over the surface of the recording member. Thus, the recording surface is exposed to provide a desired image one line at a time. Each LED in a linear array is used to expose a corresponding pixel in the recording member to a value determined by image-defining video data information applied to the LED through driver circuitry. Conventionally, binary video data signals from a data source, which may be a Raster Input Scanner (RIS), computer, word processor or other source of digitized image data is clocked into a shift register assembly. The data bits are then shifted in parallel into latch circuits where they are temporarily stored. Some time after the start of a line signal, individual LED drive circuits are selectively energized to control the on/off timing of currents flowing through the LED's. The LED's are, thus, selectively turned on and off to form a line exposure pattern on the surface of the photoreceptor. A complete image is formed by successive line exposures. US-A-4,689,694; 4,706,130; 5,138,337 and 5,126,759 are representative of prior art printhead control circuitry. Prior art exposure control systems are disclosed in US-A-4,525,729 and US-A-5,025,322. Multiplexing in a LED printer is disclosed in US-A-4,998,119 and 5,111,217. LED printers using grey level addressability along sublines is disclosed in US-A-5,025,332 and 5,138,337.

The prior art configurations are limited with respect to printing images having multiple imaging formats; e.g. an image comprising mostly text but with one or more half tone figures embedded within the text. Conventionally, the resolution of each scan line formed in the image is determined by the pixel exposure level of a single pixel scan line which occurs during a pixel time interval.

The present invention relates to a digital printer for printing on a recording medium moving in a process direction, images consisting of segments having both higher and lower resolution and comprising:
a LED printbar having a plurality of LED chips aligned along at least one row, said printbar being positioned in an image exposure relationship with said recording medium,
printbar control circuit means for selectively energizing said plurality of LED's in accordance with image data signals during a pixel time interval to print a plurality of scan lines forming an image,
drive circuit means for driving each LED chip along a plurality of sub-lines with an energizing current of a selected duration, each selected duration being some fraction of said pixel time interval thereby causing exposure of each scan line by a plurality of sub-line exposures, each sub-line exposure being associated with one of said image segments.

According to one aspect of the invention, the pixel time interval is divided into a plurality of sub-line intervals, each sub-line having an individual line exposure level. One or more sub-lines are used to write the text pattern while the remainder of sub-lines are used to write the embedded half tone at a different resolution. According to a second aspect of the invention, the sub-line technique is used to increase the number of gray level exposures possible within a given system.

A digital printer and method in accordance with the invention will now be described, by way of example, with reference to the accompanying drawings, in which:-

Figure 1 is a block diagram showing the major components of a LED printer according to the invention.

Figure 2 is a top view of the LED print head assembly shown schematically in Figure 1.

Figure 3 is a more detailed block diagram of the print control circuits of Figure 1.

Figure 4 is an electrical schematic of the strobe signal decode logic.

Figure 5 shows the binary weighted strobe signals used to produce gray levels in a variable base exposure.

Figure 6 shows a strobe signal time configuration that is position or time weighted.

Figure 7 shows a multi-format image having a half tone image embedded in text with an exploded view showing implementation of a sub-line technique.

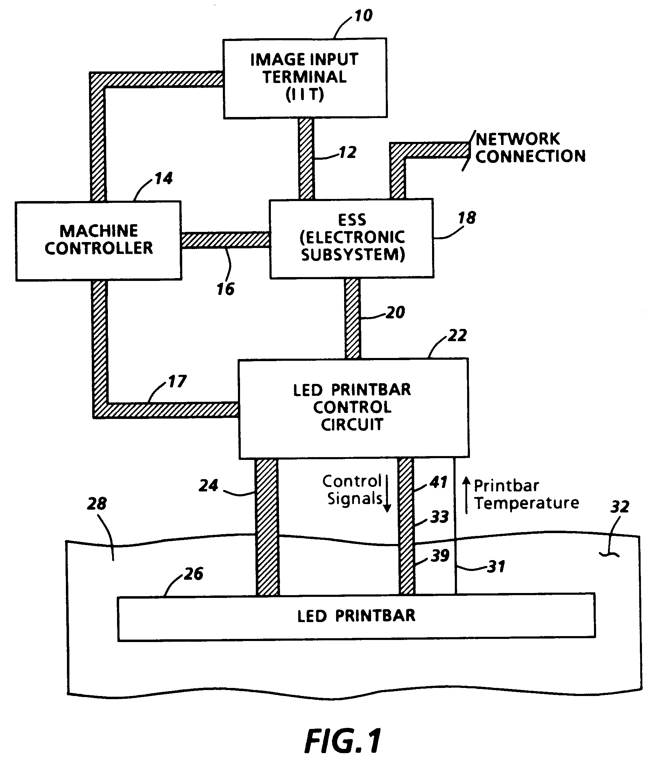

The multi-format enablement technique disclosed in the present invention can be used in digital printing environments such as that shown, for example, in US-A-5,278,625 and in US-A-4,689,694. In these references, LED printbars are selectively addressed to form line images on the surface of a charged photoreceptor belt or drum moving past the printbar. Figure 1 shows a block diagram for a data flow architecture to control the printhead operation. Binary image data originates in an image input terminal (IIT) 10 and is sent over bus 12 to ESS subsystem 18. Machine controller 14 has a stored program responsive to the input signals from IIT 10 for controlling user interface and various machine functions as well as initial process control. Image signals are processed and stored in a predetermined format in ESS (Electronic Subsystem) 18. The digital output from ESS 18(1 bit or more for each pixel) is fed over bus 20 to LED printbar control circuit 22; control output from controller 14 is also sent over control bus 17 to circuit 22. Circuit 22 performs the functions of data reformatting, further image processing, printbar temperature compensation, control signal generation, and exposure level control (which sends control bits on a pixel by pixel basis synchronous with the data bits). The binary image data output from circuit 22 is sent over bus 24 to on printbar 26. Each pixel in the modified bit stream output sent along bus 24 is represented by n bits. Thus, each pixel may be represented as having varying degrees of darkness and lightness. As an example, with three bits per pixel, eight different levels of gray can be used in the image. The individual LED's are activated to form a modulated exposure charge pattern on the surface 32 of a photoreceptor belt 28. The discharge characteristics are determined by both the light emitting characteristics of printbar 26 and the discharge characteristics of photoreceptor 28. For example, a highly efficient combination of printbar and photoreceptor includes a light emitting diode producing radiation having a wavelength of 720 nm and a corresponding photoreceptor designed for maximum discharge when irradiated with light having a wavelength of 720 nm. Also sent to LED printbar 26 are a plurality of multiple strobe lines whose function is described in detail below. Signals representing printbar temperature are sent along line 31 to circuit 22 and may be used by circuit 22 to further adjust the exposure of photoreceptor 26. Additional control signals are sent to LED printbar 26 over lines 41, 33 and 39.

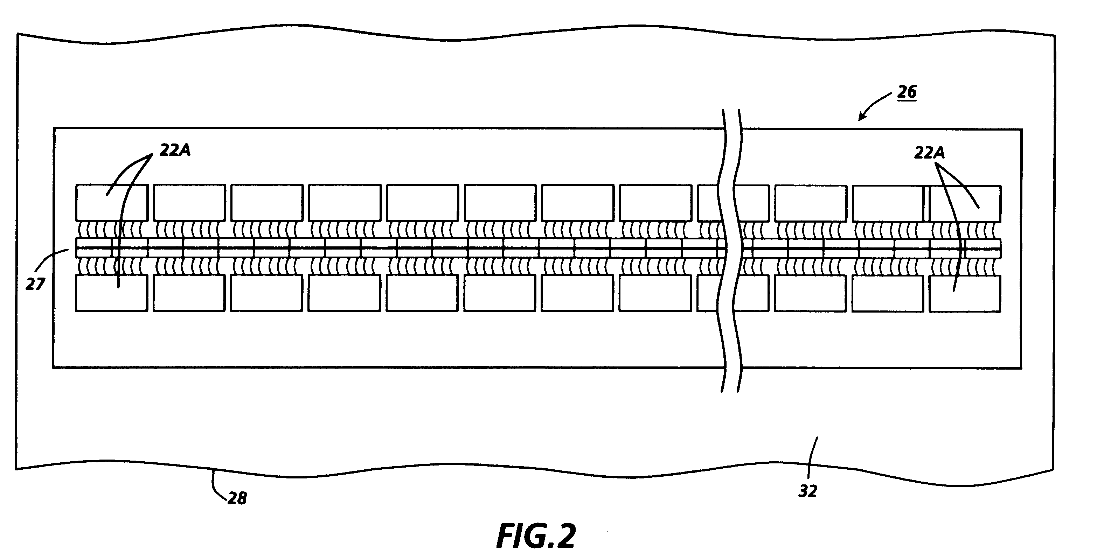

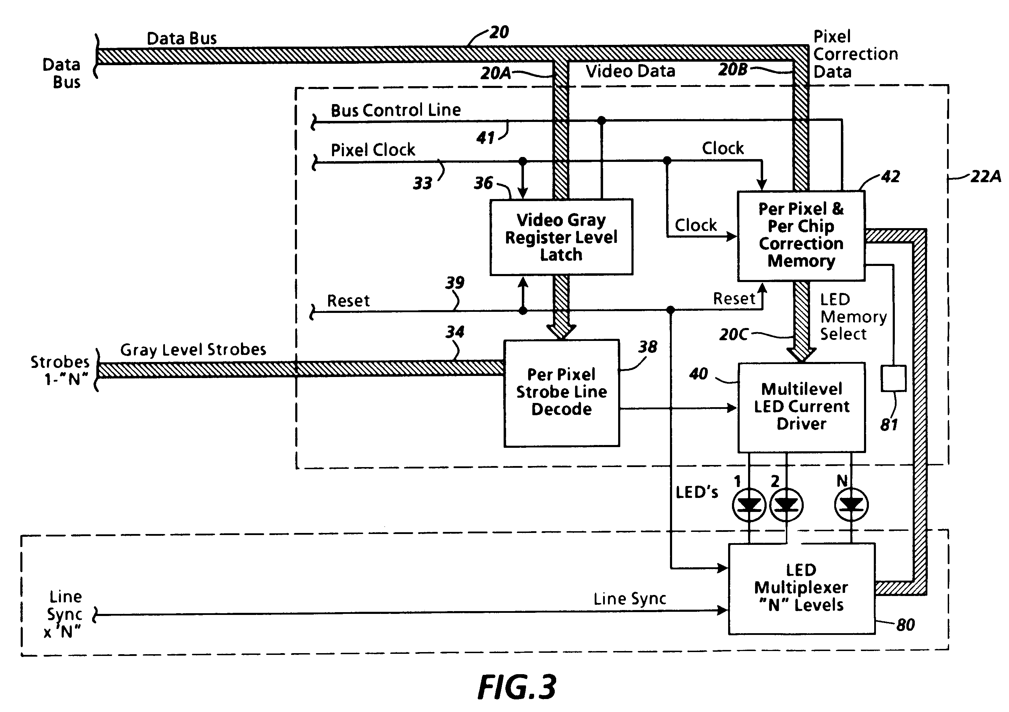

Referring now to Figure 2, the LED printbar 26 comprises a suitable support with a series of LED chips 27 mounted thereon. For this example, there are 32 LED chips, each chip having 128 LED's. LED chips 27 are arranged end-to-end in a row, and for the 32 chip embodiment, the printhead will extend across the width of belt 28 and include 4,096 LED's arranged in a single row. For each pair of LED chips, there is provided a pair of driver chips 22A. All of the driver chips are represented in circuit 22 of Figure 1; one chip is shown in block diagram form in Figure 3. The driver chips can be arranged on both sides of the LED chips. Each driver chip includes circuitry shown in Figure 3 for addressing the logic associated with each of the LED chips to control whether or not the individual LED's are energized, as well as to determine the level of current and a time duration of the signals applied to each LED pixel.

Optical means such as a gradient index lens array (not shown) may be positioned between the LED printbar 26 and surface 32 of belt 28 to focus the individual LED outputs onto the surface. The LED's (referred to as pixels hereafter) are triggered into operation (turned on and off) by means of printbar control circuit 22 responsive to information from ESS 18 and machine controller 14. The on time and, hence, the exposure of each pixel is controlled by the decoding of strobe input lines with binary video data as will be seen. The exposure pattern formed by selective discharge of surface 32 can be developed by toner particles of appropriate charge. The developed image is then transferred to an output sheet and fused. Details of charge, development, transfer and fusing using an LED type printer are disclosed in US-A-3,850,517 and 4,831,395.

Referring now to Figures 1, 2 and 3, the video data signals from the ESS are sent to the printbar control circuit 22 along bus 20. Bus 20 is a multi-line (typically 8-32) wide data bus. For this example, a 16 bit data bus is used. Bus 24 is used to load the video data (the image bit map) and printbar correction and configuration information as will be seen. Bus 24 is arbitrated by bus control signals on line 41. A pixel clock on line 33 is used to synchronize data loading.

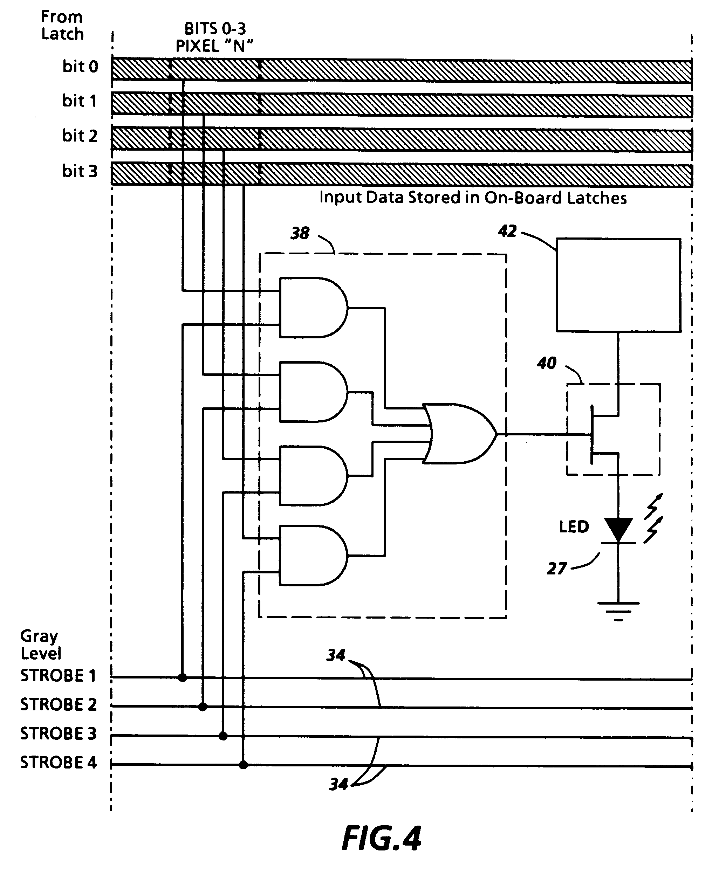

In general, the temporal on/off state of each of 128 outputs of each chip 22A is determined by the logical "OR" of all the 2-bit or the 4-bit video data logically "ANDED" with its respective four gray level strobe inputs as shown on Figure 4. The magnitude of the "on" current which is applied to each of the 4,096 LED's is set by a 6-bit "pixel uniformity correction" value and a 6-bit "array matching value", both signals having been loaded into correction memory 42. Each individual pixel uniformity correction value is dedicated to an individual driver output, but each of the two array matching values within a driver chip provides a correction for each LED chip to correct for LED chip to chip efficiency variations.

Data entry and processing proceeds as follows. Gray level strobes 1-N are entered along bus 34 into Per Pixel Strobe Line Decode Circuit 38. Video gray level latch register circuit 36 provides single line temporary storage for the video data used to store and hold the present video sent along data path 20A while the next video data line is being loaded. The latched data is used to select the proper combination of strobe lines for the respective pixel. As is shown in Figures 3 and 4, the four bit binary weighted signals are stored in latch register circuit 36. The selected signal output from latch register circuit 36 is sent to per pixel strobe line decode circuit 38. The function of this circuit is to select the proper combination of input strobe lines. Figure 4 shows implementations of the Boolean function: (bit 0·STROBE 1) + (bit 1·STROBE 2) +(bit 2·STROBE 3) + (bit 3·STROBE 4) where · is the logical "AND" and + is the logical "OR" function.

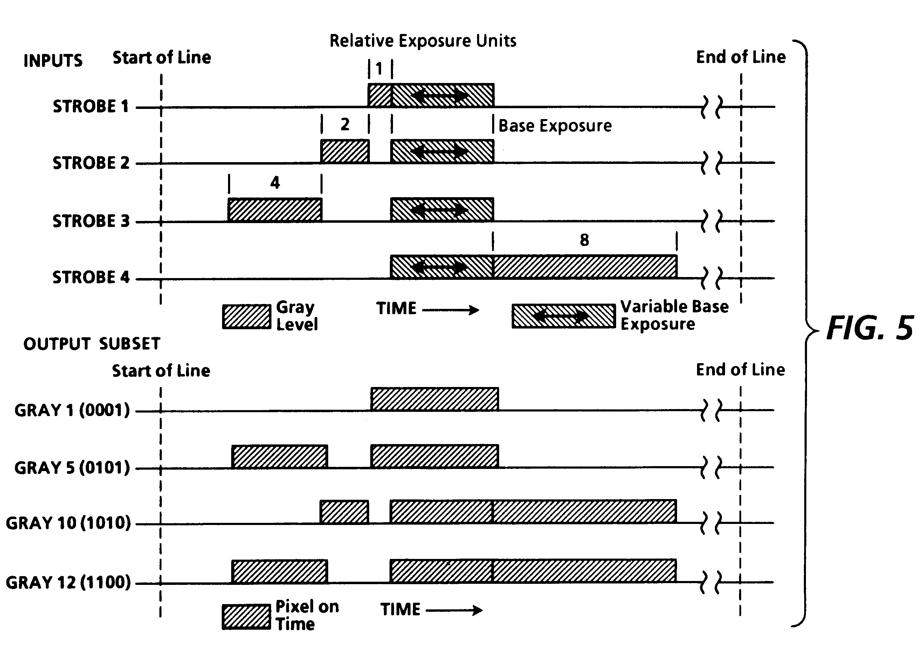

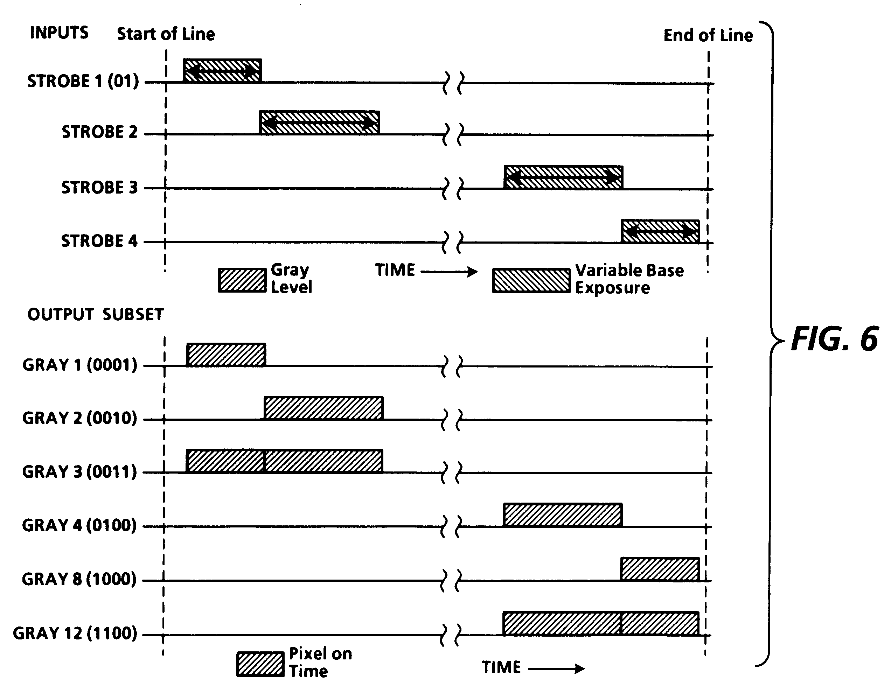

With four binary weighted input signals, 15 "on" times (or exposure levels) plus "off" are capable of being produced. Figure 5 shows the use of binary weighted strobe signals which are used to produce 15 levels of gray biased on a variable base exposure. The range span is set by adjusting the unit value of the binary weighted strobe "on" times such that "gray" value #15 is the maximum exposure required and that "gray" value #1 is the minimum required exposure level. The base exposure is used to bias the "gray level #1" value such that it is the minimum exposure required. This produces 15 separate and linearly spaced values of exposure to be produced from the minimum to the maximum exposure required by the system. The output of per pixel strobe line decode 38 is, thus, selected by the logic in response to the input gray level data and the strobe lines for each pixel. Referring to Figure 3, the output from the per pixel strobe line decode circuit 38 strobe lines are applied to the selected individual LED current drivers 40. Figure 6 shows a strobe signal time configuration that is position or time weighted so that individual pixels may be "moved" or incremented in the process direction. The particular configuration shown actually produces three levels of gray exposure positioned at the beginning or the end of the line time.

Referring to Figure 2, each LED pixel has a particular and approximately linear response to the input drive current, resulting in a difference in the LED electrical to optical gain efficiency of individual LED's and, thus, in non-uniform pixel to pixel exposure. In this system, the particular "gain" of each pixel is measured and stored as correction values in the LED printbar control circuit 22 in Figure 1. At a suitable time, usually at machine power up, the stored correction values (which may be later altered by temperature, aging or other factors) are downloaded into correction memory 42 shown in Figure 3. These stored values are used to select the proper drive current for individual LED's to compensate for LED differences and to maintain exposure uniformity. A temperature sensor 81 may be formed on each driver chip to provide operating temperature information to the correction memory 42. The magnitude of the on current applied to each LED is, thus, controlled by a 4-8 bit "uniformity correction value" dedicated to each individual pixel, which is termed a "per pixel correction". The 4-8 bit per chip correction is similarly representing the average intensity of an entire chip of LED's. Each pixel uniformity correction value is dedicated to one LED driver output, but each of the two matching values provides a baseline current for 64 LED driver outputs.

A print line is initiated by gray vector data passing along the data bus. One LED chip is selected (activated) for loading. All of the other LED chips are "deselected". Each drive chip has two associated bi-directional token passing pads. A LED chip is selected when it is in a "ready" mode and the logic level of the token passing pad configured as the input is in the active state. The bi-directional token passing pad connects the multiple drive chips in a daisy chain manner. When the first LED chip is inactivated, the "token" passes to the next chip in the selected direction.

A reset signal is applied along line 39 to clear memory tokens, reset the tokens to first memory and reset the multiplexer.

Turning now to a first aspect of the present invention, a technique is provided to enable multiple imaging formats using a sub-line technique. As is known in the art, sub-lines are subdivisions of the inherent resolution of the system. As an example, if the photoreceptor velocity and resolution of the system provide a line time (the time it takes the photoreceptor to travel one pixel width or pitch) of 200 microseconds, the line could be divided into two sublines each 100 microseconds in duration (or one half the pixel pitch). This would be analogous to operating the printbar at twice the clock speed thereby increasing the pixel addressibility by a factor of two in the direction of photoreceptor motion.

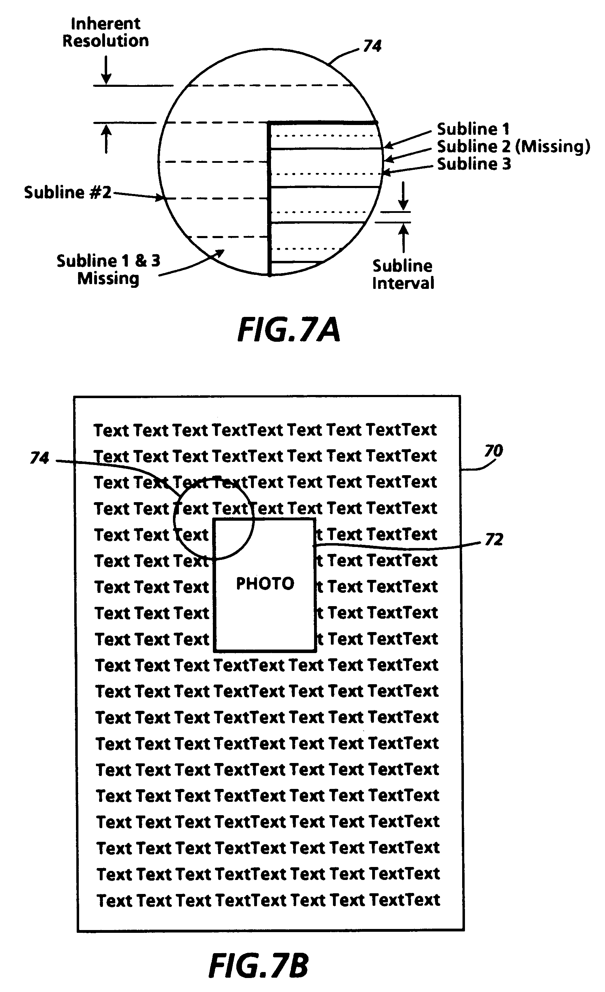

This subline technique can be used, for example, to enable multiple imaging modes within a single pixel pitch (line time). As shown in Figure 7B, a document image 70 is being printed which includes a half tone or pictoral segment 72 embedded within text areas. By utilizing this subline technique, multiple imaging modes may be implemented within the same line pitch. As an example of this technique shown in the exploded circular portion 74 of Figure 7A, the line pitch has been subdivided into 3 discrete intervals or sublines. Each of these sublines can be thought of as independent exposure lines each capable of providing sufficient exposure as are shown in Figures 5 and 6. As an example, it might be advantageous to use a binary weighted exposure system as shown in Figure 5 for pictoral information and a position weighted exposure system as shown in Figure 6 for text information. Since a LED printbar is a line printer, in normal operation it would be impossible to mix these print modes within a line. However with the present technique, several exposure methods could be utilized in a single pass by segmenting the pitch line time into sublines. In this example, the image has been segmented by the ESS 18 which provides the necessary processing and remapping of the image to enable the sublining technique. ESS 18 receives from a computer network or local memory device the binary video image data encoded in ASCII or any of a variety of coding schemes, including bitmaps. This image can be of text or graphics of lower and higher resolution, respectively. The ESS 18 converts this image data into binary pixel data and generates several images simultaneously sending the signals to the drive circuit 22. Multiplexer 80 is shown as a possible option and provides the ability to drive multiple LED's from a single driver (i.e. time share the driver). Because each pixel requires a unique correction current to maintain illumination uniformity across the printhead, the multiplexing circuit must not only select the proper LED pixel to ignite, but also must control pixel correction memory 42 to select the proper drive current for each LED pixel.

A second sub-line technique is to provide extended exposures capability to add to the 15 exposure levels already present. Using the 4 bit binary weighted strobe signals as shown in Figure 5 if, for example, the pixel time interval is divided into two sub-lines, the exposure resolution of the first sub-line can be added to the exposure resolution of the second sub-line, thereby doubling the inherent exposure resolution (e.g. from 15 to 31 levels). Also, since independent variable exposures could be used for each sub-line, the exposure resolution between the two sub-lines does not have to be contiguous. For example, sub-line 1 could provide exposure from .05 to 7.5 ergs/cm², while sub-line 2 provides 16 to 30 ergs/cm².

## Claims

1. A method for enabling multiple pitch imaging modes with a single pixel line time interval in a LED printbar, the method comprising
generating binary weighted gray level strobe signals,
generating position weighted gray level strobe signals, and
alternately selecting on a subline basis the binary weighted strobe signals to expose image segments having a first exposure value and the position weighted strobe signals to expose image segments having a second exposure value.

2. The method of claim 1 wherein said first exposure value is associated with a half tone image segment and said second exposure value is associated with an image text segment.

3. A digital printer for printing on a recording medium moving in a process direction, images consisting of segments having both higher and lower resolution and comprising:
a LED printbar having a plurality of LED chips aligned along at least one row, said printbar being positioned in an image exposure relationship with said recording medium,
printbar control circuit means for selectively energizing said plurality of LED chips in accordance with image data signals during a pixel time interval to print a plurality of scan lines forming an image, and
drive circuit means for driving each LED chip during a plurality of sub-lines with an energizing current of a selected duration, each selected duration being some fraction of said pixel time interval thereby causing exposure of each scan line by a plurality of sub-line exposures, each sub-line exposure being associated with one of said image segments.

4. The printer of claim 1 wherein said drive circuit means includes multiplexing means to drive multiple LED chips from a single driver.

5. The printer of claim 1 further including circuit means for summing the exposure resolution of said sub-line selections.

6. An image recording circuit apparatus comprising:
a LED printbar having a plurality of LED chips aligned along at least one row, said printbar being positioned in an image exposure relationship with a recording medium moving in a process direction,
means for providing relative motion between the printbar and the medium to produce a printed pixel during a pixel time interval,
a source of binary video data signals representative of a document image, said signals being processed so as to differentiate between image segments of a first resolution associated with a half tone and image segments of a second resolution associated with text,
a source of gray level stobe signals,
drive means for energizing said LED chips, for a period of time determined by input signals to said drive means, and
control means for controlling said drive means so as to control the printbar during a first subline of recording in response to a first source of binary gray level signals representing said image segments of a first resolution and during at least a second subline of recording in response to said image segments of said second resolution.

7. The apparatus of claim 6 wherein said second subline of recording is position weighted in the process direction.
